# DEMANDE DE BREVET EUROPEEN

(11) **EP 2 500 700 A2**
(43) Date de publication de la demande: **19.09.2012**
(21) Numéro de dépôt: 12158810.7
(22) Date de dépôt: 09.03.2012
(51) Int. Cl.: G01F 11/02, G01F 13/00, B65B 3/00

(54) **Doseuse**

(30) Priorité: 14.03.2011 FR 1100763
(71) Demandeur: Celtech, 29500 Ergue Gaberic (FR)
(72) Inventeur: Louboutin, Thierry, 29510 Landrevarzec (FR)
(74) Mandataire: Maillet, Alain

(57) **Abrégé**

L'invention propose une doseuse destinée à doser des produits, la doseuse comportant:
- un bac trémie (14) adapté à recevoir les produits à doser,
- une auge (17) reliée d'une part à la trémie (14) et comportant un nez d'auge (18) présentant une face d'extrémité, l'auge (17) présentant un conduit interne (20) s'étendant selon un axe longitudinal dans lequel tourne une vis poussoir (16),
- un doseur (22) formé d'une valve (26) intégrée dans un boisseau (24) disposé adjacent au nez d'auge (18), la valve (26) présentant deux orifices d'axes centraux sensiblement perpendiculaires et étant montée rotative dans le boisseau (24) entre une position d'aspiration dans laquelle l'un des orifices est orienté vers le nez d'auge (18) et une position de refoulement dans laquelle ledit orifice est orienté vers un conduit de distribution (32) situé en aval, le deuxième orifice de la valve (26) débouchant dans l'extrémité supérieure d'une chemise (28) où coulisse un piston (30), ledit doseur (22) présentant une face d'extrémité et étant monté mobile en translation selon une direction perpendiculaire à l'axe longitudinal entre une position d'utilisation dans laquelle la face d'extrémité du nez d'auge (18) et la face d'extrémité du doseur (22) sont en contact et une position de dégagement dans laquelle la face d'extrémité du nez d'auge (18) et la face d'extrémité du doseur (22) sont découplées,
ladite doseuse (10) étant **caractérisée en ce que** la face d'extrémité du nez d'auge (18) et la face d'extrémité du doseur (22) présentent des formes biaisées selon une inclinaison identique.

## Description

La présente invention se rapporte à une machine doseuse utilisable sur des lignes d'emballage ou de conditionnement, pour le remplissage, dans diverses formes de récipients, de produits minéraux ou alimentaires consistants tels que des produits types salade et des pâtés, des viandes hachées ou en morceaux, des produits en grains, légumes, agglomérés de légumes, et des produits pâteux de types salades traiteurs vinaigrettes ou des mayonnaises.

Plus particulièrement, elle concerne une doseuse destinée à doser des produits reçus en vrac en amont vers des récipients disposés en aval, la doseuse comportant un bâti sur lequel sont disposés un bac trémie adapté à recevoir les produits à doser, une auge reliée d'une part à la trémie et comportant un nez d'auge du côté opposé à la trémie, l'auge présentant un conduit interne s'étendant selon un axe longitudinal dans lequel tourne au moins une vis poussoir destinée à déplacer le produit vers l'aval, au moins un doseur formé d'une valve intégrée dans un boisseau disposé adjacent à l'auge, la valve présentant deux orifices et étant montée rotative dans le boisseau entre une position d'aspiration dans laquelle l'un des orifices est orienté vers l'auge et une position de refoulement dans laquelle ledit orifice est orienté vers un conduit de distribution situé en aval, le deuxième orifice de la valve débouchant dans une chemise où coulisse un piston.

Le document FR 2 843 798 décrit une telle machine doseuse. Il divulgue en particulier un doseur monté sur le bâti pour être déplaçable entre une position active dans laquelle il est appliqué contre le fond de la cuve et une position inactive dans laquelle il est écarté du conduit interne de l'auge pour libérer l'accès et faciliter le nettoyage des différents éléments. Pour être amené depuis la position active vers la position inactive, l'ensemble doseur, chemise et piston est monté sur une platine basculante par rapport à la trémie, puis le doseur est monté sur un élément de support lui-même monté basculant et pivotant par rapport à la platine.

La manipulation de l'élément support et de la platine de la doseuse de l'état de l'art est complexe du fait de la lourdeur des équipements et des différents mouvements à effectuer pour y avoir accès.

Le but de la présente invention est de pallier ces inconvénients et en outre de proposer une doseuse dont l'accès aux différents éléments pour le nettoyage est réalisé de manière simple.

A cet effet, l'invention propose une doseuse destinée à doser des produits reçus en vrac en amont vers des récipients disposés en aval, la doseuse comportant un bâti sur lequel sont disposés:
- un bac trémie adapté à recevoir les produits à doser,
- une auge reliée d'une part à la trémie et comportant un nez d'auge, l'auge présentant un conduit interne s'étendant selon un axe longitudinal dans lequel tourne au moins une vis poussoir destinée à déplacer le produit vers l'aval, le nez d'auge présentant une face d'extrémité,
- un doseur formé d'une valve intégrée dans un boisseau disposé adjacent au nez d'auge, la valve présentant deux orifices d'axes centraux sensiblement perpendiculaires et étant montée rotative dans le boisseau entre une position d'aspiration dans laquelle l'un des orifices est orienté vers le nez d'auge et une position de refoulement dans laquelle ledit orifice est orienté vers un conduit de distribution situé en aval, le deuxième orifice de la valve débouchant dans l'extrémité supérieure d'une chemise où coulisse un piston, ledit doseur présentant une face d'extrémité et étant monté mobile en translation selon une direction perpendiculaire à l'axe longitudinal entre une position d'utilisation dans laquelle la face d'extrémité du nez d'auge et la face d'extrémité du doseur sont en contact et une position de dégagement dans laquelle la face d'extrémité du nez d'auge et la face d'extrémité du doseur sont découplées,
   ladite doseuse étant **caractérisée en ce que** la face d'extrémité du nez d'auge et la face d'extrémité du doseur présentent des formes biaisées selon une inclinaison identique.

Avantageusement, le doseur est monté sur une plaque support elle-même montée sur des colonnes structurales télescopiques fixées au bâti et actionnées par l'intermédiaire de tiges de commande déplacées en translation par un système de vérin.

Avantageusement, la doseuse comporte en outre un élément cylindrique formant avec une partie inférieure de la colonne télescopique un ensemble vis-écrou, de sorte que la rotation de la partie inférieure entraîne l'élément cylindrique en translation, l'élément cylindrique étant fixé à un bras destiné à supporter des outils.

Avantageusement, la doseuse comporte des colonnes-fourchettes longitudinales s'étendant parallèlement à l'axe longitudinal entre une première extrémité solidaire du nez d'auge et une deuxième extrémité adaptée à s'encliqueter dans la plaque de support.

Avantageusement, la valve et la chemise sont montées solidaires en rotation, l'extrémité inférieure de la chemise étant entraînée en rotation par l'intermédiaire d'un moyeu lui-même entraîné par un servomoteur.

Avantageusement, le moyeu est un moyeu tripode.

Avantageusement, la valve et la chemise sont concentriquement fixées par l'intermédiaire de vis, la liaison étant rendue étanche par l'intermédiaire d'un joint.

Avantageusement, l'axe longitudinal du conduit interne de l'auge s'étend selon une première direction inclinée par rapport à la direction horizontale.

Avantageusement, l'inclinaison est entre 5° et 15° par rapport à la direction horizontale.

Avantageusement, le bâti comporte un cadre dont la partie inférieure s'étend dans un plan sensiblement horizontal et dont la partie supérieure est montée solidaire de la partie inférieure selon la première direction inclinée.

La présente invention sera mieux comprise à la lecture de la description détaillée qui suit réalisée sur la base des dessins annexés dans lesquels :
- la figure 1 représente une vue d'ensemble de la doseuse selon l'invention en position d'utilisation,

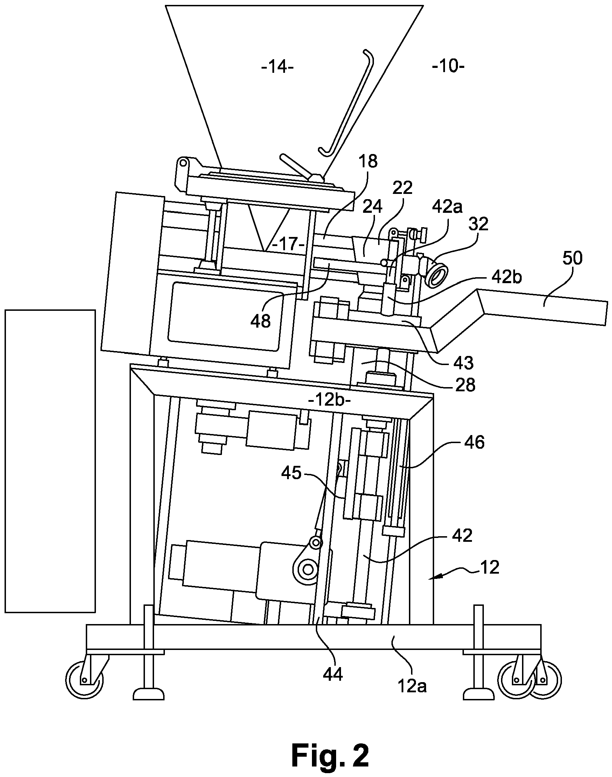

- la figure 2 représente une vue de côté de la doseuse selon l'invention en position d'utilisation,

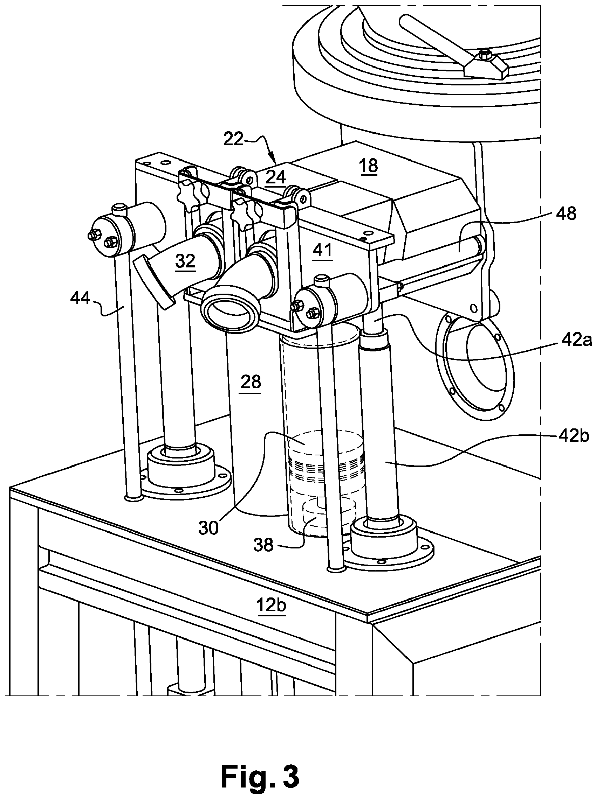

- la figure 3 représente une vue de détail de la doseuse en position d'utilisation,
- la figure 4 représente une vue en coupe de la doseuse selon un plan vertical,
- la figure 5 représente une vue de détail de la figure 4, la valve étant en position de refoulement,

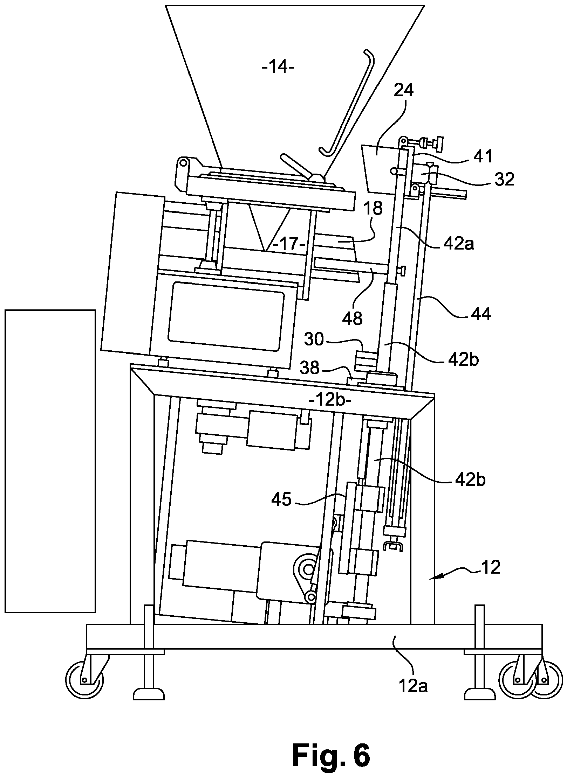

- la figure 6 représente une vue de côté de la doseuse en position de nettoyage,
- la figure 7 représente une vue de détail de la figure 6,

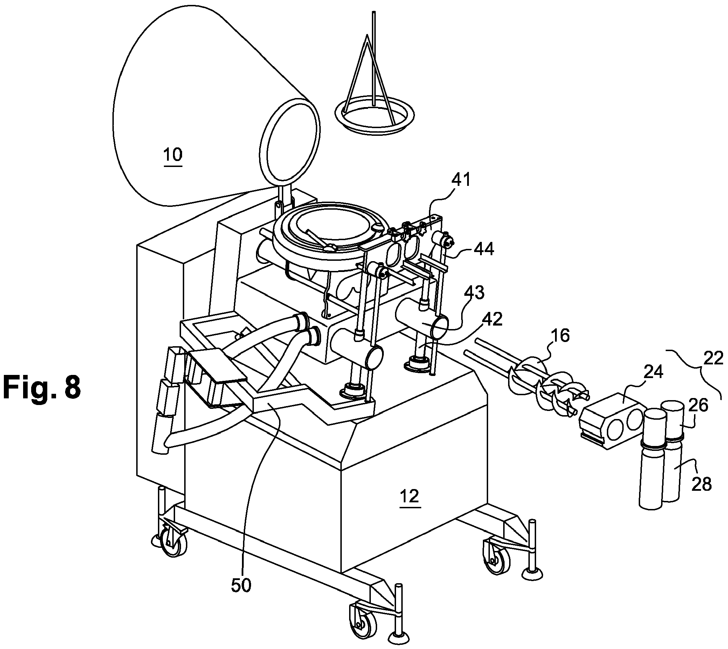

- la figure 8 représente une vue d'ensemble de la doseuse en position de nettoyage,
- la figure 9 représente une vue de détail des éléments disposés à l'intérieur du bâti.

En référence aux figures annexées, la machine doseuse 10 est destinée à doser des produits reçus en vrac en amont vers des récipients disposés en aval et elle comprend un bâti 12 formé d'un cadre métallique de forme sensiblement parallélépipédique, sur lequel un bac trémie 14 est monté. Le bac trémie 14 est destiné à recevoir en vrac les produits à doser. Le produit est alors déplacé dans le bac trémie 14 en amont vers le récipient en aval en passant au travers de différents éléments de la doseuse 10 qui seront décrits plus en détails ci-dessous.

Le bac trémie 14 est constitué d'un bac à contenance variable et reçoit en vrac le produit à doser. Le bac trémie 14 présente la forme d'un entonnoir de sorte à diriger le produit à doser vers le fond de la cuve dans laquelle s'étend de manière transversale un transporteur à vis sans fin, type vis poussoir 16 présentant un ou plusieurs filets. Le fond de la cuve est délimité par une paroi présentant une ouverture débouchant sur une auge 17 disposée sous la trémie et solidairement sur le bâti 12. L'auge 17 présente un nez d'auge 18 faisant saillie. L'auge 17 délimite un conduit interne 20 d'axe longitudinal dans lequel le produit en vrac se déplace sous l'action de la vis poussoir 16. Le nez d'auge 18 est du côté opposé à la trémie 14.

Le conduit interne 20 de l'auge 17 présente une forme sensiblement tubulaire cylindrique d'axe central sensiblement confondu avec l'axe de la vis poussoir 16. Il s'étend entre une extrémité d'entrée en contact avec l'ouverture de la paroi du bac de trémie 14 et une extrémité de sortie délimitée dans le nez d'auge 18. Le conduit interne 20 reçoit une ou plusieurs vis poussoirs 16 actionnées par un premier servomoteur.

En fonctionnement, le produit versé dans le bac trémie 14 tombe par gravité dans le fond de celui-ci et est entraîné, par rotation des vis poussoir 16, vers le nez d'auge 18.

La doseuse 10 comporte aussi un doseur 22 venant en contact avec le nez d'auge 18. Le doseur 22 est formé d'un boisseau 24 venant s'emboîter sur une valve 26. Le doseur 22 comporte une face d'extrémité venant en contact avec une face d'extrémité du nez d'auge 18 de sorte que le contact entre les deux éléments soit étanche. A cet effet un joint en caoutchouc pourra être disposé entre les deux faces d'extrémité.

De manière à faciliter le découplage et le couplage du doseur 22 avec le nez d'auge 18, les faces d'extrémité du doseur 22 et du nez d'auge 18 présentent une inclinaison identique. Ainsi lorsque le doseur 22 est déplacé vers la position de dégagement ou vers la position d'utilisation, la face d'extrémité du doseur 22 glisse sur la face d'extrémité du nez d'auge 18 et vient coincer un joint d'étanchéité entre les deux faces. Les formes biaisées des boisseaux 24 et du nez d'auge 18 favorisent une étanchéité parfaite par coincement du joint.

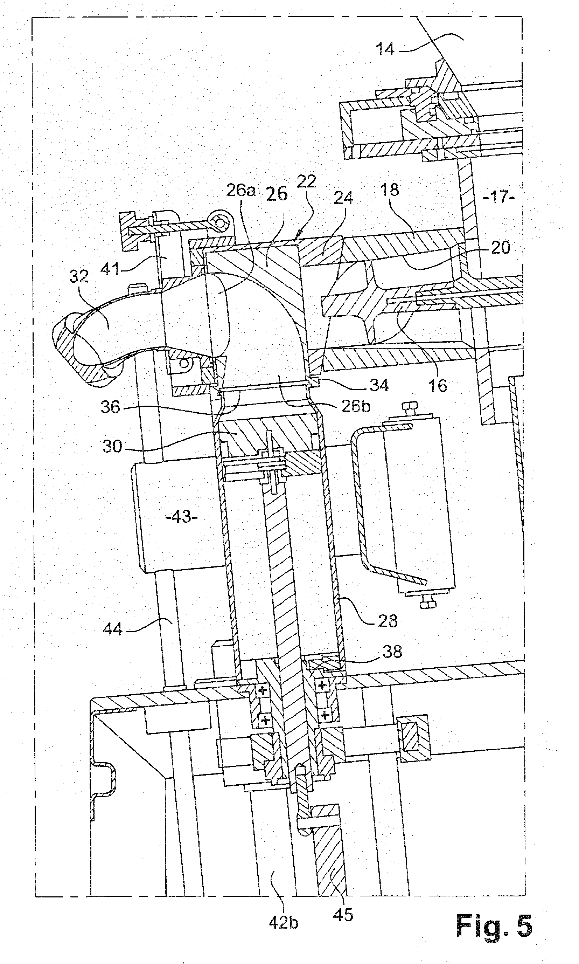

Comme cela est mieux vu sur la Fig. 5, les formes biaisées sont orientées de manière à pouvoir se séparer lorsque le doseur 22 est déplacé vers la position de dégagement. L'orientation de la direction de déplacement du doseur 22 vers la position de dégagement est ici une translation orientée vers le haut et perpendiculairement à l'axe de la vis poussoir 16.

La normale à la forme biaisée des boisseaux 24 qui est orientée vers l'extérieur des boisseaux 24 présente avec la direction de déplacement du doseur 22 vers la position de dégagement, un angle obtus. La normale à la forme biaisée du nez d'auge 18 qui est orientée vers l'extérieur du nez d'auge 18 présente avec la direction de déplacement du doseur 22 vers la position de dégagement, un angle aigu.

La valve 26 comporte un conduit intérieur présentant la forme d'un coude comportant un orifice supérieur 26a et un orifice inférieur 26b qui est en contact avec une chemise 28 dans laquelle coulisse un piston 30. Le piston 30 est actionné de haut en bas via un système rameur entraîné par un servomoteur. Le piston 30 descend et remonte dans la chemise 28 selon une course réglée pour aspirer et refouler le produit.

La valve 26 est montée pivotante autour d'un axe perpendiculaire à l'axe du conduit interne 20 de l'auge 17, de sorte à pivoter entre une position d'aspiration, dans laquelle son orifice supérieur 26a communique avec le nez d'auge 18 et prolonge le conduit interne 20 de l'auge 17 et une position de refoulement dans laquelle son orifice supérieur 26a communique avec un conduit de distribution 32 situé en aval et relié au récipient à remplir.

Lorsque la doseuse 10 est en position d'aspiration, le produit est simultanément poussé par les vis poussoir 16 et aspiré par le piston 30. La dose de produit peut ainsi être calibrée selon les besoins et taille du récipient. Par la suite, la dose de produit est refoulée vers les conduits de distribution 32 après rotation de la valve 26 dans le boisseau 24.

L'ensemble formé par le bac trémie 14, l'auge 17, la valve 26 et le conduit de distribution 32 est totalement étanche pour transporter le produit sans prise d'air et selon un rythme régulier vers les récipients à remplir.

La valve 26 est fixée de manière étanche et concentriquement à la chemise 28 dans laquelle coulisse le piston 30, grâce à un ensemble de vis 34 et un joint plat 36 sanitaire permettant d'éviter toute fuite du produit et d'air. La liaison solidaire entre la valve 26 et la chemise 28 permet d'entraîner la valve 26 en rotation indirectement par l'intermédiaire de la chemise 28 enclenchée sur un moyeu 38. Tel qu'illustré, le moyeu 38 est tripode et la chemise 28 comporte, à sa base, trois encoches qui coopèrent avec le moyeu 38 tripode.

Le moyeu 38 tripode est entraîné via une transmission secondaire par un second servomoteur et synchronisé avec les autres mouvements de la machine, notamment le premier servomoteur entraînant la vis poussoir 16, ce qui garantit la précision du dosage. Comme visible sur les figures, l'ensemble valve-chemise 28 effectue une rotation de 180°, de sorte que la valve 26 pivote entre l'auge 17 et le conduit de distribution 32 qui sont diamétralement opposés. La rotation de l'ensemble valve 26 et chemise 28 s'effectue à la fin de la phase d'aspiration ou du refoulement du produit à doser.

La rotation de la valve 26 dans le boisseau 24 assure aussi la coupe et la séparation de la dose avec le produit contenu dans le conduit interne 20 de l'auge 17.

Lorsque le piston 30 est actionné de bas en haut, il remonte et refoule la dose obtenue dans la chemise 28 vers les conduits tubulaires de distribution 32 via les valves 26. Des clapets coupe goutte 40 sont disposés en sortie des conduits de distribution 32 de sorte à doser précisément le produit avant de le refouler dans le récipient.

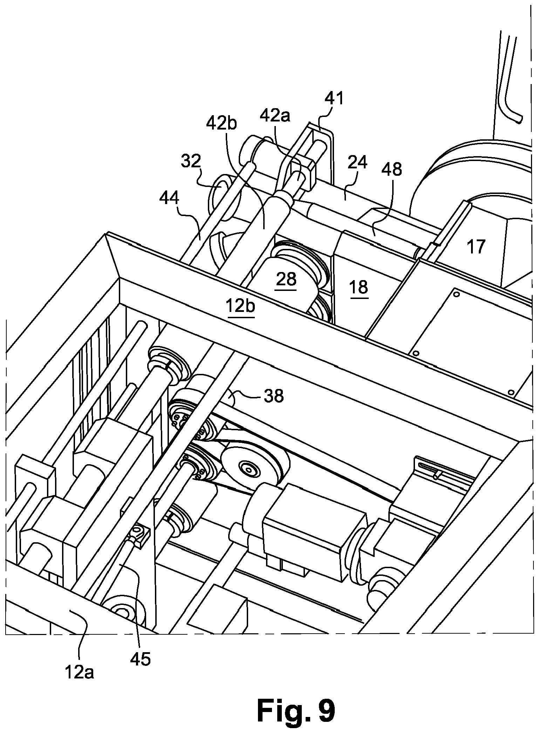

Tel que visible sur la figure 9, le servomoteur, entraînant le moyeu 38 tripode, est disposé à l'intérieur du bâti 12, ce qui permet une plus grande accessibilité des éléments décrits précédemment et disposés à l'extérieur du bâti 12, au-dessus de celui-ci.

Dans la machine doseuse 10 selon l'invention, les doseurs 22 sont montés sur une plaque support 41 fixée sur deux colonnes structurales télescopiques 42 actionnées par deux tiges 44 de commande par un vérin 46 pneumatique. Les colonnes structurales télescopiques 42 s'étendent selon une direction perpendiculaire à la direction axiale de la vis poussoir. Lorsque les colonnes 42 sont activées, elles se déploient selon la direction perpendiculaire vers le haut et entraînent le doseur 22 qui se découple du nez d'auge 18 et se soulève vers une position de dégagement facilitant l'accès aux conduits pour le nettoyage et le démontage du nez d'auge 18, de la vis poussoir 16 et de l'ensemble chemise-valve.

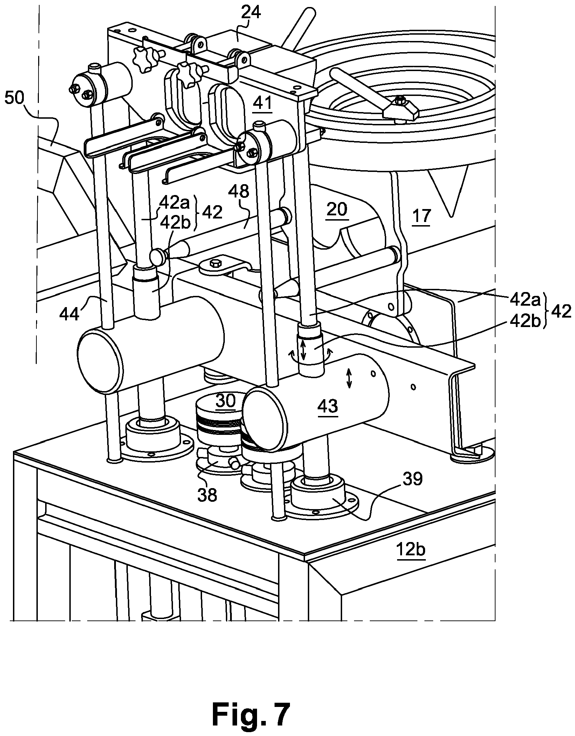

Tel que visible sur la figure 7, chaque colonne structurale est formée de deux parties cylindriques : une partie supérieure 42a montée coulissante dans une partie inférieure 42b reliée indirectement à un bras 50 sur lequel sont montés des outils non représentés.

La partie cylindrique supérieure 42a est reliée à la plaque support 41 et permet le guidage et le positionnement correct de la plaque 41 lorsque celle-ci est entraînée en translation par les tiges de commande 44.

La partie cylindrique inférieure 42b est positionnée par l'intermédiaire de paliers 39 sur le bâti 12. La partie inférieure 42b de la colonne structurale télescopique 42 est montée traversante sur bâti grâce aux paliers 39 autorisant un mouvement de rotation. Elle présente une liaison filetée avec un élément cylindrique 43, formant écrou, lié solidairement au bras 50.

La partie inférieure 42b des colonnes structurales 42 s'étend au-dessus du bâti 12 et forme avec l'élément cylindrique 43 un ensemble vis-écrou de sorte que lorsque la partie inférieure 42b est entraînée en rotation, l'élément cylindrique 43 se déplace en translation et entraîne le bras 50 en translation selon une direction perpendiculaire à l'axe longitudinal, de sorte à déplacer les outils ou conduits qui y sont reliés.

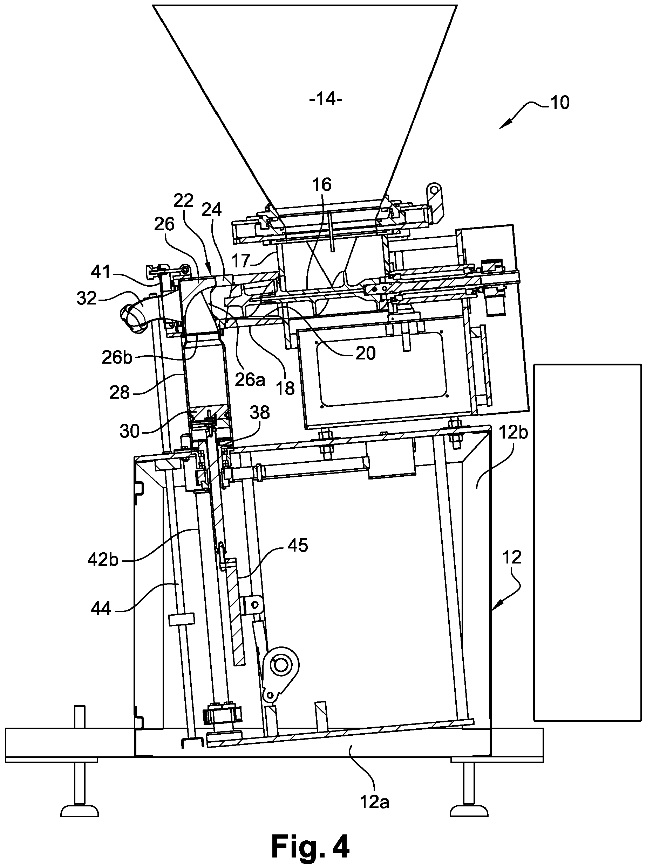

Comme visible sur la figure 4, la partie inférieure 42b des colonnes télescopiques 42 disposée à l'intérieur du bâti 12 permet de guider un rameur 45 qui actionne le piston 30 d'aspiration et de refoulement dans les chemises 28 pour assurer un mouvement linéaire de celui-ci. La plaque support 41 permet le positionnement correct du doseur 22 par rapport au nez d'auge 18 grâce à deux colonnes-fourchettes 48. Les colonnes-fourchettes permettent aussi de reprendre la poussée de la vis poussoir pour éviter le fléchissement des colonnes structurales télescopiques 42. A cet effet, le nez d'auge 18 comporte deux rainures et les colonnes-fourchettes 48 coulissent à l'intérieur des rainures, ce qui assure le positionnement correct du nez d'auge 18. De plus, la plaque support 41 vient s'emboîter sur l'extrémité des colonnes-fourchettes 48 lorsque le doseur 22 est disposé face au nez d'auge 18. Le nez d'auge 18 et la plaque support 41, et par conséquent le doseur 22, sont positionnés par rapport aux colonnes-fourchettes 48.

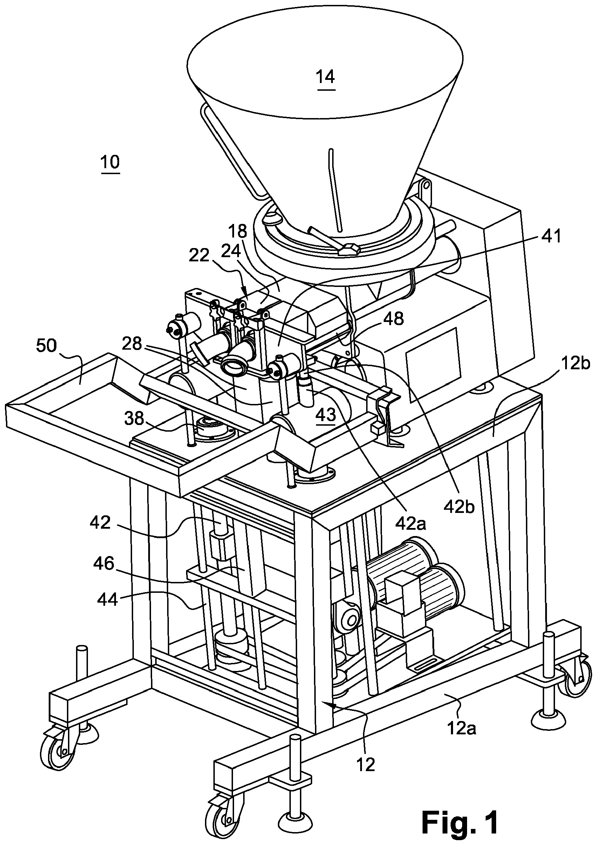

Selon un mode de réalisation préféré, et visible sur la figure 1, le bâti 12 est délimité par un cadre présentant une partie inférieure 12a s'étendant sensiblement horizontalement et une partie supérieure 12b s'étendant selon une direction inclinée. La partie supérieure 12b du cadre supporte le bac trémie 14, l'auge 18, le doseur 22, et le conduit de distribution 32 et est inclinée d'un angle compris entre 5° à 15° par rapport à la direction horizontale du sol de sorte à faciliter l'entraînement du produit d'amont en aval par gravitation. Cette disposition offre aussi l'avantage de faciliter l'écoulement de l'eau lors du nettoyage.

La valve et la chemise sont montées solidaires en rotation, par l'intermédiaire d'un moyeu entraîné par un servomoteur, le doseur est monté mobile en translation selon une direction perpendiculaire à l'axe longitudinal et l'axe du conduit interne de l'auge s'étend selon une première direction sensiblement inclinée par rapport à la direction horizontale.

Grâce à ces dispositions, les valves sont entraînées en rotation par l'intermédiaire des chemises. Le système d'entraînement des valves ne nécessite pas d'être disposé à proximité de celles-ci. Ce sont les chemises qui sont reliées à un servomoteur dédié à ce mouvement de rotation. La doseuse selon l'invention est donc moins complexe à réaliser, et offre l'avantage de positionner le servomoteur entraînant indirectement les valves à distance de celles-ci. De plus la manipulation du doseur selon une simple translation est rendue plus facile que les mouvements nécessaires au couplage et découplage du doseur des doseuses de l'art antérieur et permet un centrage automatique des éléments. Enfin l'inclinaison de la doseuse assure un meilleur écoulement du produit en phase d'utilisation de la doseuse ou un meilleur écoulement de l'eau en phase de nettoyage.

Comme mentionné ci-dessus:
- le moyeu est un moyeu tripode ;
- l'axe longitudinal est incliné entre 5° et 15° par rapport à la direction horizontale ;
- la valve et la chemise sont concentriquement fixées par l'intermédiaire de vis, la liaison étant rendu étanche par l'intermédiaire d'un joint ;
- le doseur est monté sur une plaque support elle-même montée sur des colonnes structurales télescopiques fixées au bâti et actionnées par l'intermédiaire de tiges de commande déplacées en translation par un système de vérin ;
- la doseuse comporte en outre un élément cylindrique formant avec une partie inférieure de la colonne télescopique un ensemble vis-écrou, de sorte que la rotation de la partie inférieure entraîne l'élément cylindrique en translation, l'élément cylindrique étant relié à un bras destiné à supporter des outils ;
- le doseur et le nez d'auge comportent chacun une face d'extrémité venant en contact l'une de l'autre en position d'utilisation, les deux faces d'extrémités étant inclinées selon un même angle pour permettre le positionnement correct du doseur par rapport au nez d'auge vers la position d'utilisation ;
- le doseur et le nez d'auge présentent, en position d'utilisation, un contact étanche ;
- le bâti comporte un cadre dont la partie inférieure s'étend dans un plan sensiblement horizontal et dont la partie supérieure est montée solidaire de la partie inférieure selon la première direction inclinée ;
- la doseuse comporte des colonnes-fourchettes longitudinales s'étendant parallèlement à l'axe longitudinal entre une première extrémité solidaire de l'auge et une deuxième extrémité adaptée à s'encliqueter dans la plaque de support.

## Revendications

1. Doseuse (10) destinée à doser des produits reçus en vrac en amont vers des récipients disposés en aval, la doseuse (10) comportant un bâti (12) sur lequel sont disposés:
- un bac trémie (14) adapté à recevoir les produits à doser,
- une auge (17) reliée d'une part à la trémie (14) et comportant un nez d'auge (18), l'auge (17) présentant un conduit interne (20) s'étendant selon un axe longitudinal dans lequel tourne au moins une vis poussoir (16) destinée à déplacer le produit vers l'aval, le nez d'auge (18) présentant une face d'extrémité,
- un doseur (22) formé d'une valve (26) intégrée dans un boisseau (24) disposé adjacent au nez d'auge (18), la valve (26) présentant deux orifices d'axes centraux sensiblement perpendiculaires et étant montée rotative dans le boisseau (24) entre une position d'aspiration dans laquelle l'un des orifices est orienté vers le nez d'auge (18) et une position de refoulement dans lequel ledit orifice est orienté vers un conduit de distribution (32) situé en aval, le deuxième orifice de la valve (26) débouchant dans l'extrémité supérieure d'une chemise (28) où coulisse un piston (30), ledit doseur (22) présentant une face d'extrémité et étant monté mobile en translation selon une direction perpendiculaire à l'axe longitudinal entre une position d'utilisation dans laquelle la face d'extrémité du nez d'auge (18) et la face d'extrémité du doseur (22) sont en contact et une position de dégagement dans laquelle la face d'extrémité du nez d'auge (18) et la face d'extrémité du doseur (22) sont découplées,
ladite doseuse (10) étant **caractérisée en ce que** la face d'extrémité du nez d'auge (18) et la face d'extrémité du doseur (22) présentent des formes biaisées selon une inclinaison identique.

2. Doseuse selon la revendication 1, **caractérisée en ce que** le doseur (22) est monté sur une plaque support (41) elle-même montée sur des colonnes structurales télescopiques (42) fixées au bâti (12) et actionnées par l'intermédiaire de tiges (44) de commande déplacées en translation par un système de vérin (46).

3. Doseuse selon la revendication 2, **caractérisée en ce qu'**elle comporte en outre un élément cylindrique (43) formant avec une partie inférieure (42b) de la colonne télescopique (42) un ensemble vis-écrou, de sorte que la rotation de la partie inférieure (42a) entraîne l'élément cylindrique (43) en translation, l'élément cylindrique étant fixé à un bras (50) destiné à supporter des outils.

4. Doseuse selon l'une des revendications précédentes, **caractérisée en ce qu'**elle comporte des colonnes-fourchettes (48) longitudinales s'étendant parallèlement à l'axe longitudinal entre une première extrémité solidaire du nez d'auge (18) et une deuxième extrémité adaptée à s'encliqueter dans la plaque de support (41).

5. Doseuse selon l'une des revendications précédentes, **caractérisée en ce que** la valve (26) et la chemise (28) sont montées solidaires en rotation, l'extrémité inférieure de la chemise (28) étant entraînée en rotation par l'intermédiaire d'un moyeu (38) lui-même entraîné par un servomoteur.

6. Doseuse selon la revendication précédente dans laquelle le moyeu (38) est un moyeu tripode.

7. Doseuse selon l'une des revendications précédentes, **caractérisée en ce que** la valve (26) et la chemise (28) sont concentriquement fixées par l'intermédiaire de vis (34), la liaison étant rendue étanche par l'intermédiaire d'un joint.

8. Doseuse selon l'une des revendications précédentes, **caractérisée en ce que** l'axe longitudinal du conduit interne (20) de l'auge (17) s'étend selon une première direction inclinée par rapport à la direction horizontale.

9. Doseuse selon la revendication 8, **caractérisée en ce que** l'inclinaison est entre 5° et 15° par rapport à la direction horizontale.

10. Doseuse selon l'une des revendications 8 ou 9, **caractérisée en ce que** le bâti (12) comporte un cadre dont la partie inférieure (12a) s'étend dans un plan sensiblement horizontal et dont la partie supérieure (12b) est montée solidaire de la partie inférieure (12b) selon la première direction inclinée.
